# EUROPÄISCHE PATENTSCHRIFT

(11) **EP 2 280 478 B1**
(45) Veröffentlichungstag und Bekanntmachung des Hinweises auf die Patenterteilung: **07.10.2020**
(21) Anmeldenummer: 10007606.6
(22) Anmeldetag: 22.07.2010
(51) Int. Cl.: H02P 6/22, H02P 6/16

(54) **Elektronisch kommutierter Motor**
Electronically commuted motor
Moteur électronique commuté

(30) Priorität: 24.07.2009 DE 102009034663
(43) Veröffentlichungstag der Anmeldung: 02.02.2011
(73) Patentinhaber: ebm-papst St. Georgen GmbH & Co. KG, 78112 St. Georgen (DE)
(72) Erfinder: Hirt, Markus, 78052 Villingen-Schwenningen (DE)
(74) Vertreter: Staeger & Sperling Partnerschaftsgesellschaft mbB

(56) Entgegenhaltungen:
- DE-A1- 4 137 559
- DE-A1-102006 020 676

## Beschreibung

Die Erfindung betrifft einen elektronisch kommutierten Motor (ECM) mit einem Rotor und einer Einrichtung zur Bestimmung der Drehrichtung des Rotors.

Bei bekannten ECMs benötigt die Einrichtung zur Bestimmung der Drehrichtung neben einem ersten Rotorstellungssignal, welches z.B. von einem dem Rotor zugeordneten, ersten Hallsensor erzeugt wird, zusätzliche Informationen. Diese können beispielsweise aus einem zweiten Rotorstellungssignal abgeleitet werden, welches z.B. von einem dem Rotor zugeordneten, zweiten Hallsensor erzeugt wird. Alternativ kann die erforderliche Information z.B. aus einem Spannungssignal abgeleitet werden, welches eine bei einer Drehung des Rotors in einer zugeordneten Statorwicklung induzierte Spannung repräsentiert, die mit einem geeigneten Spannungsmessglied erfasst wird.

Sowohl für das erste, als auch für das zweite Rotorstellungssignal und/oder das Spannungssignal muss die Drehrichtungsbestimmungseinrichtung, z.B. ein geeigneter Mikrocontroller, einen separaten Eingang aufweisen. Dies erfordert eine aufwändige Ausgestaltung des Mikrocontrollers, welcher eine vorgegebene Mindestanzahl von Eingängen für diese Signale haben muss.

Die DE 10 2006 020676 A1 zeigt einen elektronisch kommutierten Motor mit einem Stator, dem Statorstränge zugeordnet sind, mit einem Rotor, mit einer Endstufe zur Beeinflussung des Motorstroms und einer Steuerung. Hallsensoren sind mit der Steuerung verbunden und erlauben eine drehstellungsabhängige Ansteuerung der Statorstränge. In einem Zustand mit einem eingeschalteten unteren MOSFET wird ein Spannungswert für die in den Statorsträngen induzierte Spannung ermittelt. Ein Zeitpunkt des Auftretens eines ersten Hallwechsels wird mit Hilfe der Hallsensoren bestimmt. Aus einem gemessenen Zeitpunkt eines ersten Hallwechsels und dem gemessenen Zeitpunkt eines zweiten Hallwechsels wird ein Drehzahlwert bestimmt, und aus einem Spannungswert und dem Drehzahlwert wird die Motorkonstante bestimmt.

Aufgabe der vorliegenden Erfindung ist es, einen neuen ECM bereit zu stellen.

Diese Aufgabe wird durch einen Elektromotor nach Anspruch 1 gelöst. Hierdurch wird es z.B. möglich, einen Mikrocontroller mit einer reduzierten Zahl von Eingängen zu verwenden. Darüber hinaus kann eine solche Drehrichtungsbestimmung bei Motoren bzw. Lüftern Anwendung finden, deren Rotoren sich zu Beginn einer Bestromung noch bzw. bereits drehen. Dies kann z.B. der Fall sein, wenn der Motor bzw. Lüfter fremd angetrieben wird, beispielsweise durch einen Luftstrom, oder falls dieser im Impulsbetrieb arbeitet, d.h. nach einem Ausschalten wird der Motor bzw. Lüfter unmittelbar wieder eingeschaltet, bevor er zum Stillstand kommt. Bevorzugte Weiterbildungen sind Gegenstand der Unteransprüche.

Weitere Einzelheiten und vorteilhafte Weiterbildungen der Erfindung ergeben sich aus den im Folgenden beschriebenen und in den Zeichnungen dargestellten Ausführungsbeispielen. Es zeigt:
- Fig. 1: ein Blockdiagramm einer beispielhaften Vorrichtung 100 zur Bestimmung der Drehrichtung eines ECM 150,
- Fig. 2: ein vereinfachtes Schaltbild einer beispielhaften Schaltung 200 mit einem zweisträngigen, vierpoligen ECM 250,
- Fig. 3A-B: ein Flussdiagramm mit einem beispielhaften Verfahren 300 zur Bestimmung der Drehrichtung des ECMs 250 von Fig. 2,
- Fig. 4: ein Messdiagramm 400 zur Illustration des Verfahrens 300 der Fig. 3A-B bei der Bestimmung einer Drehrichtung in einem ersten Betriebsmodus,
- Fig. 5: ein Messdiagramm 500 zur Illustration des Verfahrens 300 der Fig. 3A-B bei der Bestimmung der Drehrichtung in einem zweiten Betriebsmodus,
- Fig. 6: ein Messdiagramm 600 zur Illustration des Verfahrens 300 der Fig. 3A-B bei der Bestimmung der Drehrichtung in einem dritten Betriebsmodus,
- Fig. 7: ein Messdiagramm 700 zur Illustration des Verfahrens 300 der Fig. 3A-B bei der Bestimmung der Drehrichtung in einem zweiten Betriebsmodus,
- Fig. 8: ein Messdiagramm 800 mit einem beispielhaften Drehzahlsignal 810 für die gemäß dem Bestromungsmuster 460 von Fig. 4 betriebene Schaltung 200 von Fig. 2,
- Fig. 9: ein Messdiagramm 900 mit einem beispielhaften Drehzahlsignal 910 für die gemäß dem Bestromungsmuster 760 der Fig. 7 betriebene Schaltung 200 von Fig. 2,
- Fig. 10: ein Messdiagramm 1000 mit einem beispielhaften Drehzahlsignal 1010 bei dem gemäß dem Stand der Technik betriebenen ECM 250 von Fig. 2.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

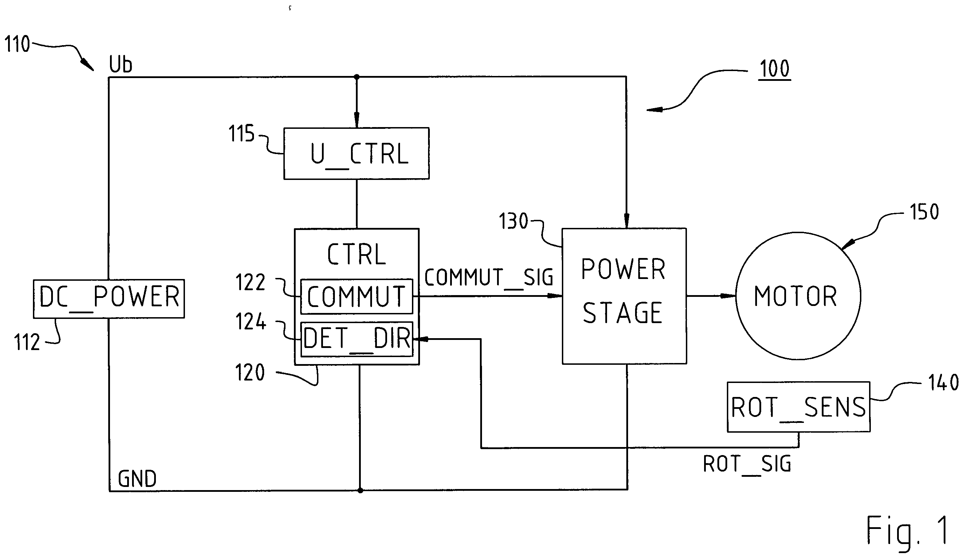

**Fig. 1** zeigt eine Vorrichtung 100 zum Betrieb eines ECM 150 an einem Gleichspannungsnetz 110. Die Vorrichtung 100 ist zur Bestimmung einer Information über einen tatsächlichen Betriebszustand des ECM 150 ausgebildet, um auf der Basis dieser Information zu ermitteln, ob der tatsächliche Betriebszustand des ECM 150 einem ausgewählten Betriebszustand entspricht.

Die Vorrichtung 100 dient zum Anschluss an eine Gleichspannungsquelle 112 (DC_POWER) zur Bereitstellung einer Versorgungsspannung Ub im Gleichspannungsnetz 110. Die Spannung Ub wird einerseits über ein Konstantspannungsglied 115 (U_CTRL) einer Steuereinheit 120 (CTRL) zugeführt und andererseits einer Endstufe 130 (POWER STAGE) des ECM 150. Das Konstantspannungsglied 115 erzeugt aus der Versorgungsspannung Ub eine im Wesentlichen konstante Betriebsspannung für die Steuereinheit 120.

Die Steuereinheit 120 umfasst eine Kommutierungssteuerung 122 (COMMUT) und eine Auswerteeinheit 124 (DET_DIR), welche eingangsseitig mit mindestens einem Sensor 140 (ROT_SENS) verbunden ist. Dieser erzeugt im Betrieb ein Signal ROT_SIG, aus welchem ein elektrisches Bild der Rotation des ECM 150 zumindest ableitbar ist. Die Kommutierungssteuerung 122 erzeugt Signale COMMUT _SIG für die Endstufe 130 des ECM 150. Diese können in Abhängigkeit von dem Signal ROT_SIG erzeugt werden.

Im Betrieb steuert die Steuereinheit 120 die Endstufe 130 mit den Signalen COMMUT_SIG, um den ECM 150 gemäß einem vorgegebenen Bestromungsmuster zu bestromen. Dieses Muster ist einem ausgewählten Betriebszustand des ECM 150 zugeordnet, z.B. einer vorgegebenen Soll-Drehrichtung. Der ECM 150 soll somit in Drehung in diese Soll-Drehrichtung versetzt werden, z.B. mit einer vorgegebenen Soll-Drehzahl.

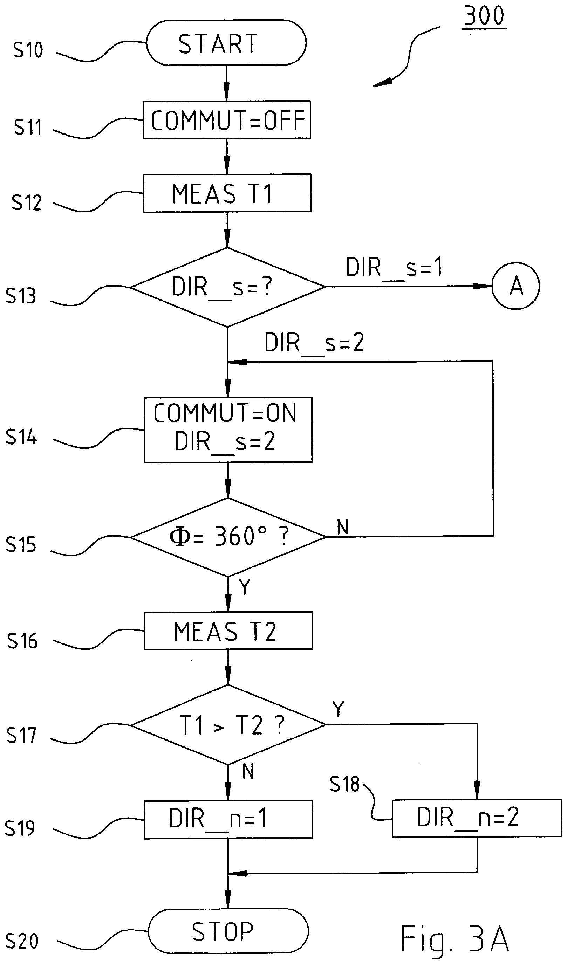

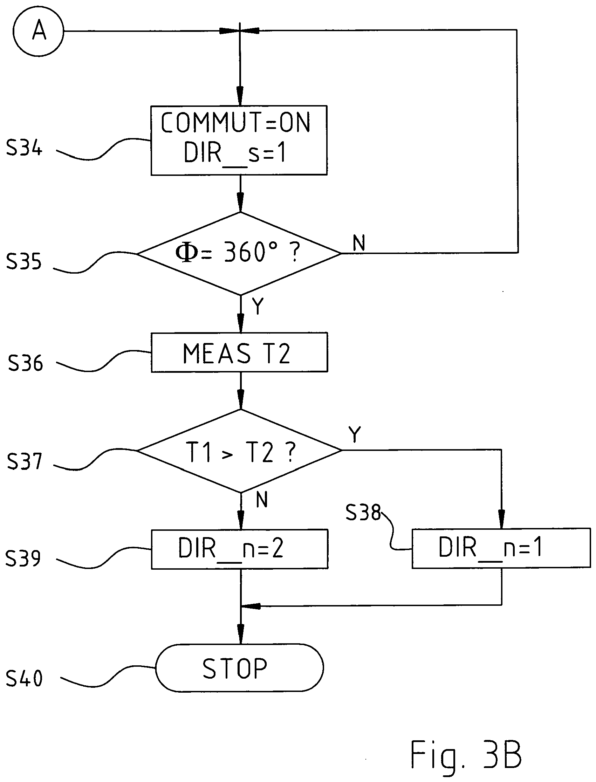

Gemäß einer Ausführungsform führt die Steuereinheit 120 eine Vermessung des ECM 150 aus, um eine Information über dessen augenblickliche Drehrichtung zu erhalten. Mit dieser Information soll ermittelt werden, ob die augenblickliche Drehrichtung des ECM 150 durch dessen Ansteuerung gemäß dem vorgegebenen Bestromungsmuster der vorgegebenen Soll-Drehrichtung entspricht. Ein geeignetes Programm zur Bestimmung dieser Information wird bei Fig. 3 beschrieben.

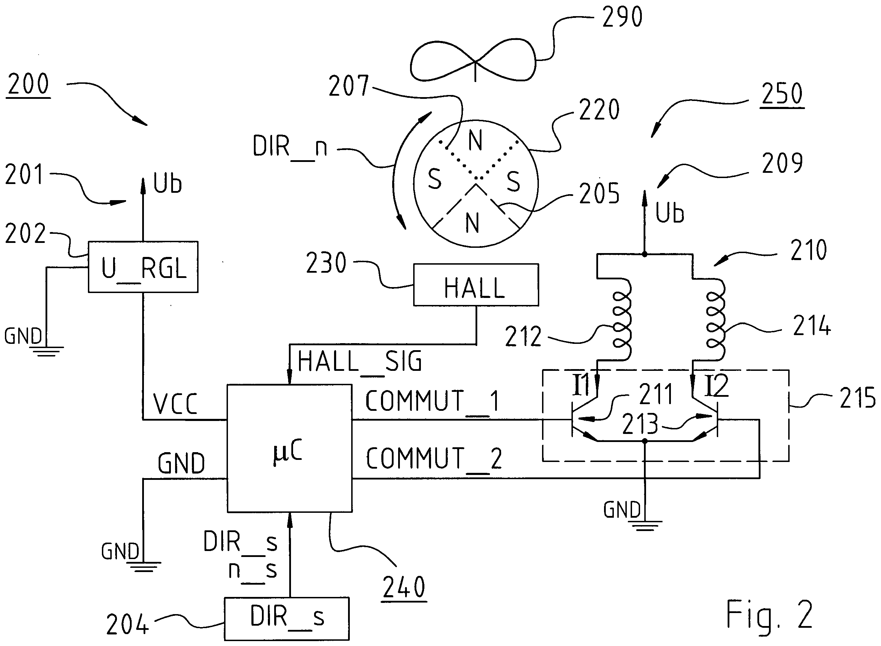

**Fig. 2** zeigt vereinfacht eine Schaltung 200, mit der die Vorrichtung 100 von Fig. 1 realisiert werden kann. Die Schaltung 200 hat einen zweisträngigen, vierpoligen ECM 250 mit einem Stator 210, der eine Statorwicklungsanordnung mit zwei Wicklungssträngen 212, 214 aufweist. Der ECM 250 dient hier zum Antrieb eines schematisch dargestellten Lüfters 290.

Der Stator 210 steht in Wechselwirkung mit einem permanentmagnetischen, vierpoligen Rotor 220, dem ein Sensor 230 (HALL) zur Erzeugung eines elektrischen Bilds mindestens eines vorgegebenen Segments 205, 207 einer vollständigen mechanischen Umdrehung des Rotors 220 zugeordnet ist. Der Sensor 230 ist bevorzugt ein Rotorstellungssensor zur Erzeugung eines Rotorstellungssignals HALL_SIG, welches das elektrische Bild des vorgegebenen Segments 205, 207 aufweist.

Der Sensor 230 ist ein galvanomagnetischer Sensor, z.B. ein Hallgenerator, oder z.B. ein optischer Sensor. Die Segmente 205, 207 können Drehwinkelbereiche sein, die Nordpolen des Rotors 220 entsprechen. Es ist jedoch genauso möglich, Südpole des Rotors 220 und/oder Süd- und/oder Nordpole als Segmente einer vollständigen mechanischen Umdrehung des Rotors 220 zu definieren.

Die Schaltung 200 hat einen Spannungsregler 202, der mit Masse GND und einem Pluspol 201 verbunden ist, an dem z.B. die Versorgungsspannung Ub liegt. Der Spannungsregler 202 ist mit einer Steuerungseinrichtung 240 verbunden und führt dieser eine Betriebsspannung Vcc zu.

Die Steuereinrichtung 240 ist beispielhaft als Mikrocontroller (µC) ausgebildet und ebenfalls mit Masse GND verbunden. Der Mikrocontroller 240 implementiert die Kommutierungssteuerung 122 und die Auswerteeinheit 124 der Fig. 1. Darüber hinaus ist der Mikrocontroller 240 eingangseitig mit dem Rotorstellungssensor 230 und einer Drehrichtungsvorgabeeinheit 204 (DIR_S) zur Erzeugung eines Soll-Drehrichtungssignals DIR_s verbunden. Die Drehrichtungsvorgabeeinheit 204 ist beispielsweise ein manuell von einem Benutzer betätigbarer Schalter und kann auch dazu ausgebildet sein, eine Soll-Drehzahl n_s vorzugeben.

Ausgangsseitig ist der Mikrocontroller 240 mit einer Endstufe 215 zur Bestromung der Wicklungsstränge 212, 214 gemäß einem vorgegebenen Bestromungsmuster verbunden, welches gemäß einer Ausführungsform einer ausgewählten Soll-Drehrichtung und Soll-Drehzahl des ECM 250 zugeordnet ist. Die Endstufe 215 hat zwei Halbleiterschalter 211, 213. Der Basis dieser Transistoren 211, 213 wird vom Mikrocontroller 240 ein Kommutierungssignal COMMUT_1 bzw. COMMUT_2 zugeführt. Die Emitter der Transistoren 211, 213 sind mit Masse GND verbunden, der Kollektor des Transistors 211 ist mit einem ersten Ende des Wicklungsstrangs 212 und der Kollektor des Transistors 213 mit einem ersten Ende des Wicklungsstrangs 214 verbunden. Die anderen Enden der Wicklungsstränge 212, 214 sind mit einem Pluspol 209 verbunden, an dem beispielhaft ebenfalls die von der Gleichspannungsquelle 112 von Fig. 1 bereitgestellte Versorgungsspannung Ub anliegt.

Im Betrieb der Schaltung 200 erzeugt der Regler 202 aus der Spannung Ub, nämlich einer im Wesentlichen konstanten Gleichspannung von z.B. +12 V, eine Betriebsspannung Vcc mit einer Amplitude von z.B. +5 V zum Betrieb des Mikrocontrollers 240. Dieser erzeugt in Abhängigkeit von dem Soll-Drehrichtungssignal DIR_s und der Soll-Drehzahl n_s, oder daraus abgeleiteten Größen, die Kommutierungssignale COMMUT_1 und COMMUT_2 zur Ansteuerung der Endstufe 215. Mit diesen Signalen werden die Halbleiterschalter 211 bzw. 213 ein- und ausgeschaltet, um die Wicklungsstränge 212, 214 gemäß einem dem Soll-Drehrichtungssignal DIR_s und der Soll-Drehzahl n_s zugeordneten Bestromungsmuster zur Erzeugung von Motorströmen I1 bzw. I2 zu bestromen, um ein wechselndes Magnetfeld zum Antrieb des Rotors 220 zu erzeugen. Um sicherzustellen, dass der Rotor 220 sich in die vorgegebene Soll-Drehrichtung dreht, wird hierbei eine augenblickliche Drehrichtung bestimmt, wie unten bei Fig. 3 beschrieben.

**Fig. 3A-B** zeigt ein beispielhaftes Verfahren 300 zur Bestimmung der augenblicklichen Drehrichtung des ECM 250 der Fig. 2, welches bei Schritt S10 mit einer Bestromung des ECM 250 beginnt. Die augenblickliche Drehrichtung repräsentiert beispielhaft einen tatsächlichen Betriebszustand des ECM 250. Gemäß einer Ausführungsform wird das Verfahren 300 zumindest teilweise von dem Mikrocontroller 240, dem Rotorstellungssensor 230 und/oder der Endstufe 215 der Fig. 2 ausgeführt.

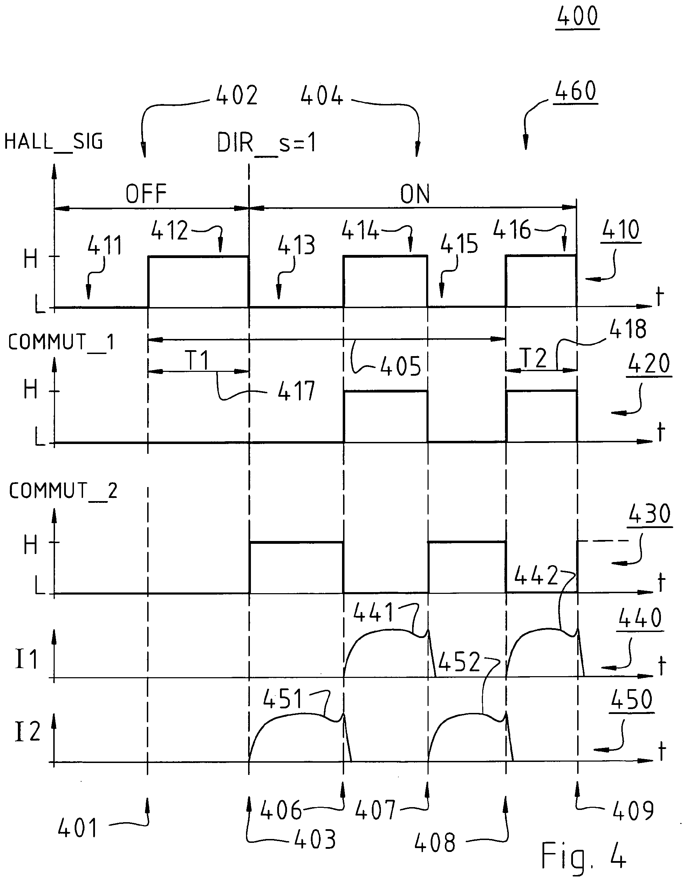

In Schritt S11 wird die Endstufe 215 ausgeschaltet, damit die Wicklungsstränge 212, 214 stromlos werden. In Schritt S12 wird bei einer ersten Vermessung des ECM 250 im unbestromten Zustand während eines ersten Durchlaufens eines vorgegebenen Segments des Rotors 220, z.B. des Segments 205, ein erstes elektrisches Bild oder Abbild dieses Segments bestimmt. Auf der Basis dieses ersten Bilds wird eine erste drehzahlrelevante Zeitspanne T1 (Fig. 4 bis 7) bestimmt.

Gemäß einer Ausführungsform weist das elektrische Bild einer Rotation des ECM 250, insbesondere das Bild einer vollständigen mechanischen Umdrehung des Rotors 220, mindestens einen ersten und einen zweiten Wert, wobei die erste Zeitspanne T1 einer Zeitdauer zwischen einem Wechsel des elektrischen Bilds vom zweiten zum ersten Wert und einem darauf folgenden Wechsel vom ersten zum zweiten Wert entspricht. Die Bestimmung des ersten elektrischen Bilds und der ersten drehzahlrelevanten Zeitspanne T1 wird unten bei Fig. 4 bis 7 beschrieben.

In Schritt S13 wird eine gewünschte Drehrichtung DIR_s ausgewählt, welche einen ausgewählten Betriebszustand des ECM 250 vorgibt. Falls eine erste mögliche Drehrichtung 1 (DIR_s = 1) ausgewählt wird, die z.B. einen Vorwärts- oder Rechtslauf des ECM 250 kennzeichnet, fährt das Verfahren 300 in FIG. 3B bei Schritt S34 fort. Falls die der ersten Drehrichtung DIR_s = 1 entgegengesetzte, zweite mögliche Drehrichtung 2 (DIR_s = 2) ausgewählt wird, die z.B. einen Rückwärts- oder Linkslauf des ECM 250 kennzeichnet, fährt das Verfahren 300 in Schritt S14 fort.

Dort wird ein der ausgewählten Drehrichtung DIR_s = 2 zugeordnetes Bestromungsmuster bestimmt und die Wicklungsstränge 212, 214 werden gemäß diesem Muster bestromt, um eine Drehung des Rotors in die Drehrichtung DIR_s = 2 zu bewirken. Im Schritt S15 wird bestimmt, ob ein n-faches einer vollständigen mechanischen Umdrehung des Rotors 220, gemessen ab dem Beginn des ersten Durchlaufs des vorgegebenen Segments 205, abgelaufen ist, wobei n = 1, 2, 3, etc. ist. Falls JA, fährt das Verfahren 300 im Schritt S16 fort, ansonsten kehrt es zu Schritt S14 zurück.

In S16 wird bei einer zweiten Vermessung des ECM 250 im bestromten Zustand während des Durchlaufens des vorgegebenen Segments 205 ein zweites elektrisches Bild des Segments 205 bestimmt. Auf der Basis dieses zweiten Bilds wird analog zur Bestimmung der ersten Zeitspanne T1 eine zweite drehzahlrelevante Zeitspanne T2 (Fig. 4 bis 7) bestimmt. Die Bestimmung des zweiten elektrischen Bilds und der zweiten drehzahlrelevanten Zeitspanne T2 wird ebenfalls bei Fig. 4 bis 7 beschrieben.

In S17 wird das erste Bild mit dem zweiten Bild verglichen, um eine Information über die augenblickliche Drehrichtung des ECM 250 zu ermitteln. Hierbei wird die T1 mit T2 verglichen, um eine zeitliche Differenz Δt zu ermitteln, die die augenblickliche Drehrichtung kennzeichnet. Falls T1 größer als T2 ist, fährt das Verfahren 300 in S18 fort. Ansonsten, d.h. falls die erste Zeitspanne T1 kleiner oder gleich der zweiten Zeitspanne T2 ist, fährt das Verfahren 300 in S19 fort.

In Schritt S18 wird die zweite Drehrichtung DIR_s = 2 als augenblickliche Drehrichtung DIR_n bestimmt, d.h. DIR_n = 2. In Schritt S19 wird die erste Drehrichtung DIR_s = 1 als augenblickliche Drehrichtung DIR_n bestimmt, d.h. DIR_n = 1.

Das Verfahren 300 endet in S20, bei dem diese augenblickliche Drehrichtung DIR_n mit der Soll-Drehrichtung DIR_s = 2 verglichen wird. Somit kann auf der Basis der in S17 ermittelten Information bestimmt werden, ob die augenblickliche Drehrichtung DIR_n und die Soll-Drehrichtung DIR_s = 2 übereinstimmen.

In S34 wird ein der gewählten Drehrichtung DIR_s = 1 zugeordnetes Bestromungsmuster bestimmt, und die Wicklungsstränge 212, 214 werden gemäß diesem Muster bestromt, um eine Drehung des Rotors in der ausgewählten Drehrichtung DIR_s = 1 zu bewirken. In S35 wird bestimmt, ob, wie bei S15 beschrieben, ein n-faches einer vollständigen mechanischen Umdrehung des Rotors 220 abgelaufen ist, wobei n = 1, 2, 3, etc. ist. Falls JA, fährt das Programm 300 in S36 fort, ansonsten kehrt es zu S34 zurück.

In S36 wird bei einer zweiten Messung des ECM 250 im bestromten Zustand während des Durchlaufens des vorgegebenen Segments 205 ein zweites elektrisches Bild des Segments 205 bestimmt. Auf der Basis dieses zweiten Bilds wird, wie bei S16 beschrieben, eine zweite drehzahlrelevante Zeitspanne T2 (Fig. 4 bis 7) bestimmt.

In S37 wird das erste Bild wie bei S17 beschrieben mit dem zweiten Bild verglichen, um eine Information über die augenblickliche Drehrichtung des ECM 250 zu erhalten, wobei T1 mit T2 verglichen wird. Falls T1 größer als T2 ist, fährt das Programm 300 in S38 fort. Ansonsten, d.h. falls T1 kleiner oder gleich T2 ist, geht das Programm 300 zu Schritt S39.

In S38 wird die erste Drehrichtung DIR_s = 1 als augenblickliche Drehrichtung DIR_n bestimmt, d.h. DIR_n = 1. In S39 wird die zweite Drehrichtung DIR_s = 2 als augenblickliche Drehrichtung DIR_n bestimmt, d.h. DIR_n = 2.

Das Programm 300, bei dem diese augenblickliche Drehrichtung DIR_n mit der Soll-Drehrichtung DIR_s = 1 verglichen wird, endet in S40. Somit kann auf der Basis der in S37 ermittelten Information ermittelt werden, ob die augenblickliche Drehrichtung DIR_n mit der Soll-Drehrichtung DIR_s = 1 übereinstimmt.

**Fig. 4** zeigt ein Messdiagramm 400 mit einem Rotorstellungssignal 410 (HALL_SIG), Kommutierungssignalen 420, 430 (COMMUT_1, COMMUT_2), sowie zugeordneten Motorströmen 440, 450 (I₁ bzw. I₂) im Betrieb der Schaltung 200 von Fig. 2. Das Rotorstellungssignal 410 wird wie bei Fig. 2 beschrieben von dem Sensor 230 bei der Drehung des Rotors 220 erzeugt. In Fig. 4 wird angenommen, dass der Rotor 220 im unbestromten Zustand des ECM 250 eine augenblickliche Drehrichtung aufweist, die der Drehrichtung 1 von Fig. 3 entspricht.

Die Kommutierungssignale 420, 430 werden wie beschrieben von dem Mikrocontroller 240 erzeugt, um die Halbleiterschalter 211, 213 der Endstufe 215 ein- und auszuschalten, so dass die Motorströme 440, 450 in den Wicklungssträngen 212, 214 fließen. Das Rotorstellungssignal 410 und die Kommutierungssignale 420, 430 definieren ein Bestromungsmuster 460, mit dem die Wicklungsstränge 212, 214 bestromt werden, um eine Drehung des Rotors 220 in der Soll-Drehrichtung 1 von Fig. 3 (DIR_s = 1) zu bewirken.

Das Rotorstellungssignal 410 ist ein elektrisches Bild einer Rotation des ECM 250. Hierbei repräsentiert ein mit "OFF" gekennzeichneter Bereich 402 des Signals 410 ein elektrisches Bild einer Rotation des ECM 250 im unbestromten Zustand der Wicklungsstränge 212, 214 und ein mit "ON" gekennzeichneter Bereich 404 repräsentiert ein elektrisches Bild einer Rotation des ECM 250 im bestromten Zustand.

Das Signal 410 hat einen ersten Wert H und einen zweiten Wert L, und es hat in Bereichen 411, 413 und 415 den Wert L, und in Bereichen 412, 414, 416 den Wert H. Der zwischen zwei Zeitpunkten 401, 403 liegende Bereich 412, in dem das Signal 410 zum Zeitpunkt 401 vom zweiten zum ersten Wert, d.h. von L nach H, und dann zum Zeitpunkt 403 vom ersten zum zweiten Wert, d.h. von H nach L, wechselt, ist einem Drehwinkelbereich des Rotors 220 zugeordnet, welcher z.B. einem ersten Durchlauf durch das Segment 205 entspricht. Dementsprechend repräsentiert der Bereich 412 ein erstes elektrisches Bild dieses Segments 205. Auf der Basis dieses Bilds 412 kann, wie bei Schritt S12 von Fig. 3 beschrieben, eine erste drehzahlrelevante Zeitspanne 417 bestimmt werden, die mit "T1" gekennzeichnet ist.

Ab dem Zeitpunkt 403 wird die Endstufe 215 mit den Signalen 430, 420 angesteuert, um die Wicklungsstränge 212, 214 zu bestromen. Hierbei wird z.B. vom Zeitpunkt 403 bis zum Zeitpunkt 406 zunächst der Halbleiterschalter 213 eingeschaltet, um den Wicklungsstrang 214 zu bestromen, so dass in diesem ein Strom 451 fließt, während der Halbleiterschalter 211 ausgeschaltet bleibt. Vom Zeitpunkt 406 bis zu einem Zeitpunkt 407 wird der Halbleiterschalter 213 ausgeschaltet und der Halbleiterschalter 211 eingeschaltet, um den Wicklungsstrang 212 zu bestromen, so dass in diesem ein Strom 441 fließt. Hierbei detektiert der Rotorstellungssensor 230 einen Durchlauf des Segments 207 des Rotors 220 und erzeugt den Bereich 414 des Signals 410. Vom Zeitpunkt 407 bis zu einem Zeitpunkt 408 wird der Halbleiterschalter 211 wieder ausgeschaltet und der Halbleiterschalter 213 wird wieder eingeschaltet, um den Wicklungsstrang 214 erneut zu bestromen, so dass in diesem ein Strom 452 fließt. Vom Zeitpunkt 408 bis zu einem Zeitpunkt 409 wird der Halbleiterschalter 213 ausgeschaltet und der Halbleiterschalter 211 wieder eingeschaltet, um den Strang 212 erneut zu bestromen, so dass in diesem ein Strom 442 fließt. Hierbei detektiert der Rotorstellungssensor 230 einen erneuten Durchlauf des Segments 205 des Rotors 220 und erzeugt den Bereich 416 des Signals 410.

Da hier zwischen den Zeitpunkten 401 und 408 eine vollständige mechanische Umdrehung 405 des Rotors 220 erfolgt, repräsentiert der Bereich 416 einen Drehwinkelbereich des Rotors 220, welcher einem zweiten Durchlauf des Segments 205 von Fig. 2 entspricht. Dementsprechend ist der Bereich 416 ein zweites elektrisches Bild dieses Segments 205. Auf der Basis dieses Bilds 416 kann, wie bei Schritt S36 von Fig. 3 beschrieben, eine zweite drehzahlrelevante Zeitspanne 418 bestimmt werden, die mit "T2" gekennzeichnet ist.

Wie Fig. 4 zeigt, ist T2 kleiner bzw. kürzer als T1. Der Grund ist, dass der im unbestromten Zustand sich in die augenblickliche Drehrichtung 1 (Fig. 3) drehende Rotor 220 bei der Bestromung der Wicklungsstränge 212, 214 in diese Drehrichtung angetrieben wird, d.h. die aktuelle Drehrichtung und die Soll-Drehrichtung stimmen überein. Der Rotor 220 wird somit beschleunigt, so dass sich der Durchlauf des Segments 205 von T1 auf T2 verkürzt. Somit kann im vorliegenden Beispiel von Fig. 4 gemäß S38 von Fig. 3 die erste Drehrichtung DIR_s = 1 als augenblickliche Drehrichtung DIR_n bestimmt werden.

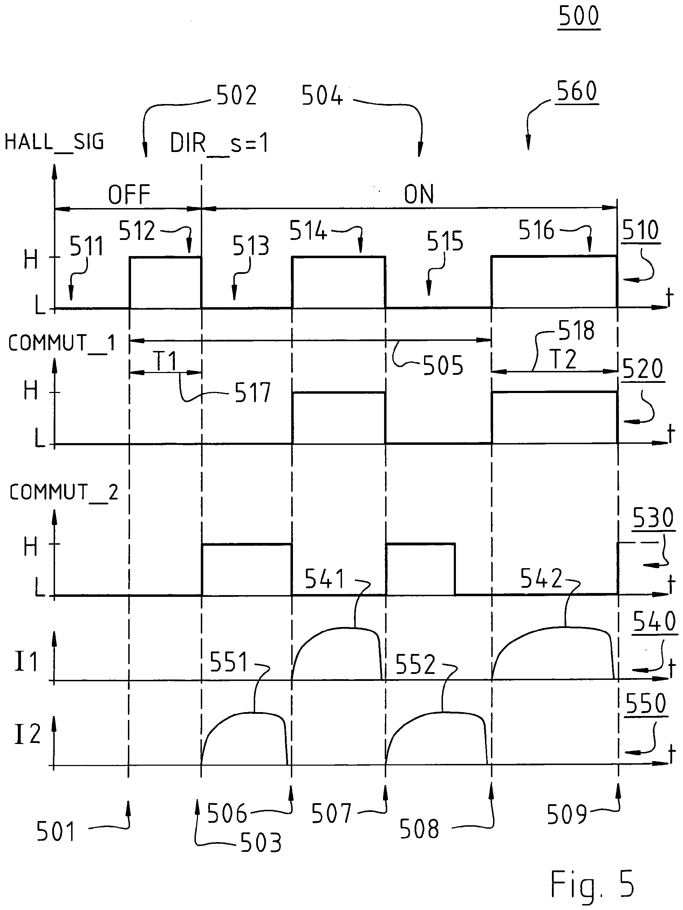

**Fig. 5** zeigt ein Messdiagramm 500 mit einem Rotorstellungssignal 510 (HALL_SIG), Kommutierungssignalen 520, 530 (COMMUT_1, COMMUT _2), sowie zugeordneten Motorströmen 540, 550 (I₁ bzw. I₂) im Betrieb der Schaltung 200 von Fig. 2. In Fig. 5 wird davon ausgegangen, dass der Rotor 220 im unbestromten Zustand des ECM 250 eine augenblickliche Drehrichtung hat, die der Drehrichtung 2 von Fig. 3 entspricht. Das Rotorstellungssignal 510 und die Kommutierungssignale 520, 530 definieren gemäß einer Ausführungsform ein Bestromungsmuster 560, mit dem die Wicklungsstränge 212, 214 bestromt werden, um eine Drehung des Rotors 220 in die Soll-Drehrichtung 1 von Fig. 3 (DIR_s = 1) zu bewirken.

Das Rotorstellungssignal 510 ist ein elektrisches Bild einer Rotation des ECM 250. Hierbei ist ein mit "OFF" gekennzeichneter Bereich 502 des Signals 510 ein elektrisches Bild einer Rotation des ECM 250 im unbestromten Zustand der Stränge 212, 214 und ein mit "ON" gekennzeichneter Bereich 504 zeigt ein elektrisches Bild einer Rotation des ECM 250 im bestromten Zustand.

Das Signal 510 hat in Bereichen 511, 513 und 515 einen Wert L und in Bereichen 512, 514, 516 einen Wert H. Der zwischen zwei Zeitpunkten 501, 503 liegende Bereich 512, in dem das Signal 510 zum Zeitpunkt 501 von L nach H und dann zum Zeitpunkt 503 von H nach L wechselt, ist einem Drehwinkelbereich des Rotors 220 zugeordnet, welcher z.B. einem ersten Durchlauf des Segments 205 entspricht. Für diesen Bereich 512 kann, wie bei Schritt S12 von Fig. 3 beschrieben, eine erste drehzahlrelevante Zeitspanne 517 bestimmt werden, die mit "T1" gekennzeichnet ist.

Ab dem Zeitpunkt 503 wird die Endstufe 215 mit den Signalen 520, 530 angesteuert, um die unbestromten Wicklungsstränge 212, 214 zu bestromen. Vom Zeitpunkt 503 bis zum Zeitpunkt 506 und vom Zeitpunkt 507 bis zum Zeitpunkt 508 wird der Halbleiterschalter 213 eingeschaltet, um den Wicklungsstrang 214 zu bestromen, so dass in diesem Ströme 551 bzw. 552 fließen, während der Halbleiterschalter 211 ausgeschaltet bleibt. Vom Zeitpunkt 506 bis zum Zeitpunkt 507 und vom Zeitpunkt 508 bis zum Zeitpunkt 509 wird der Halbleiterschalter 213 ausgeschaltet und der Halbleiterschalter 211 eingeschaltet, um den Wicklungsstrang 212 zu bestromen, so dass in diesem Ströme 541 bzw. 542 fließen. Hierbei detektiert der Rotorstellungssensor 230 zwischen den Zeitpunkten 506 und 507 einen Durchlauf des Segments 207 des Rotors 220 und erzeugt den Bereich 514 des Signals 510. Zwischen den Zeitpunkten 508 und 509 detektiert der Rotorstellungssensor 230 einen erneuten Durchlauf des Segments 205 des Rotors 220 und erzeugt den Bereich 516 des Signals 510.

Da zwischen den Zeitpunkten 501 und 508 beispielhaft eine vollständige mechanische Umdrehung 505 des Rotors 220 liegt, repräsentiert der Bereich 516 ein zweites elektrisches Bild des Segments 205. Auf der Basis dieses Bilds 516 kann, wie bei S36 von Fig. 3 beschrieben, eine zweite drehzahlrelevante Zeitspanne 518 bestimmt werden, die mit "T2" gekennzeichnet ist.

Wie aus Fig. 5 ersichtlich, ist die Zeitspanne T2 größer bzw. länger als die Zeitspanne T1. Dies ist der Fall, da der im unbestromten Zustand sich in die augenblickliche Drehrichtung 1 von Fig. 3 drehende Rotor 220 bei der Bestromung der Wicklungsstränge 212, 214 entgegen dieser Drehrichtung angetrieben wird, d.h. die augenblickliche Drehrichtung und die Soll-Drehrichtung stimmen nicht überein. Der Rotor 220 wird somit gebremst, so dass sich der Durchlauf des Segments 205 von T1 auf T2 verlängert. Somit kann im vorliegenden Beispiel von Fig. 5 gemäß Schritt S39 von Fig. 3 die zweite Drehrichtung DIR_s = 2 als augenblickliche Drehrichtung DIR_n bestimmt werden.

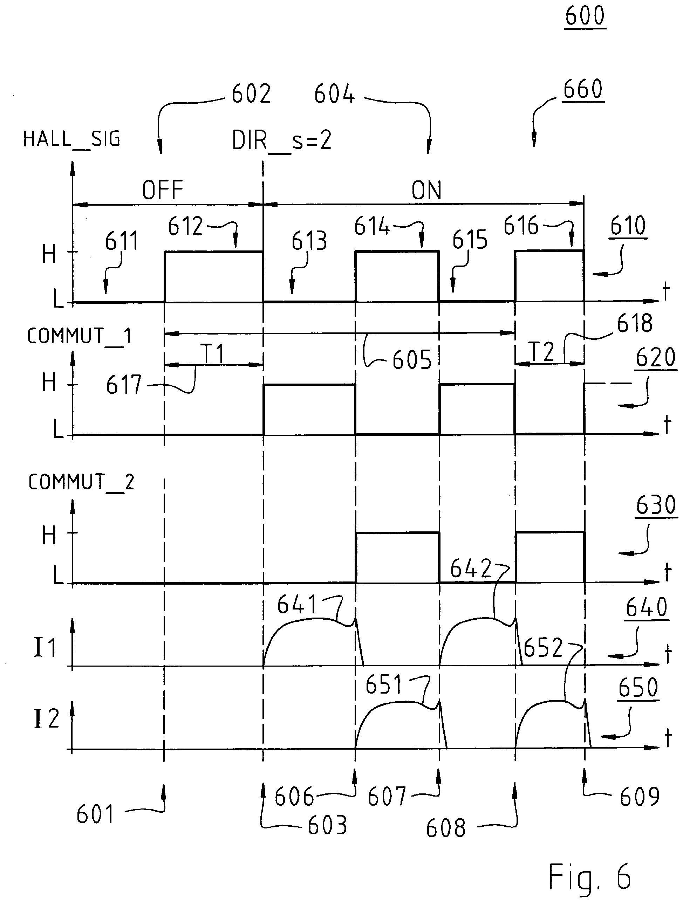

**Fig. 6** zeigt ein beispielhaftes Messdiagramm 600 mit einem Rotorstellungssignal 610 (HALL_SIG), Kommutierungssignalen 620, 630 (COMMUT_1, COMMUT_2), sowie zugeordneten Motorströmen 640, 650 (I₁ bzw. I₂) im Betrieb der Schaltung 200 von Fig. 2. In Fig. 6 wird davon ausgegangen, dass der Rotor 220 im unbestromten Zustand des ECM 250 eine augenblickliche Drehrichtung aufweist, die der Drehrichtung 2 von Fig. 3 entspricht. Das Rotorstellungssignal 610 und die Kommutierungssignale 620, 630 definieren gemäß einer Ausführungsform ein Bestromungsmuster 660, mit dem die Wicklungsstränge 212, 214 bestromt werden, um eine Drehung des Rotors 220 in der Soll-Drehrichtung 2 von Fig. 3 (DIR_s = 2) zu bewirken.

Das Rotorstellungssignal 610 ist ein elektrisches Bild einer Rotation des ECM 250. Hierbei repräsentiert ein mit "OFF" gekennzeichneter Bereich 602 des Signals 610 ein elektrisches Bild einer Rotation des ECM 250 im unbestromten Zustand der Stränge 212, 214 und ein mit "ON" gekennzeichneter Bereich 604 repräsentiert ein elektrisches Bild einer Rotation des ECM 250 im bestromten Zustand.

Das Signal 610 hat in Bereichen 611, 613 und 615 einen Wert L und in Bereichen 612, 614, 616 einen Wert H. Der zwischen zwei Zeitpunkten 601, 603 liegende Bereich 612, in dem das Signal 610 zum Zeitpunkt 601 von L nach H und dann zum Zeitpunkt 603 von H nach L wechselt, ist einem Drehwinkelbereich des Rotors 220 zugeordnet, welcher z.B. einem ersten Durchlauf des Segments 205 entspricht. Für diesen Bereich 612 kann, wie bei Schritt S12 von Fig. 3 beschrieben, eine erste drehzahlrelevante Zeitspanne 617 bestimmt werden, die mit "T1" gekennzeichnet ist.

Ab dem Zeitpunkt 603 wird die Endstufe 215 mit den Signalen 620, 630 angesteuert, um die Wicklungsstränge 212, 214 zu bestromen. Hierbei wird vom Zeitpunkt 603 bis zum Zeitpunkt 606 und vom Zeitpunkt 607 bis zum Zeitpunkt 608 der Halbleiterschalter 211 eingeschaltet, um den Strang 212 zu bestromen, so dass in diesem Ströme 641 bzw. 642 fließen, während der Halbleiterschalter 213 ausgeschaltet bleibt. Vom Zeitpunkt 606 bis zum Zeitpunkt 607 und vom Zeitpunkt 608 bis zum Zeitpunkt 609 wird der Halbleiterschalter 211 ausgeschaltet und der Halbleiterschalter 213 eingeschaltet, um den Strang 214 zu bestromen, so dass in diesem Ströme 651 bzw. 652 fließen. Hierbei detektiert der Rotorstellungssensor 230 zwischen den Zeitpunkten 606 und 607 einen Durchlauf des Segments 207 des Rotors 220 und erzeugt den Bereich 614 des Signals 610. Zwischen den Zeitpunkten 608 und 609 detektiert der Rotorstellungssensor 230 einen erneuten Durchlauf des Segments 205 des Rotors 220 und erzeugt den Bereich 616 des Signals 610.

Da zwischen den Zeitpunkten 601 und 608 eine vollständige mechanische Umdrehung 605 des Rotors 220 erfolgt, repräsentiert der Bereich 616 ein zweites elektrisches Bild des Segments 205. Auf der Basis dieses Bilds 616 kann, wie bei Schritt S16 von Fig. 3 beschrieben, eine zweite drehzahlrelevante Zeitspanne 618 bestimmt werden, die mit "T2" gekennzeichnet ist.

Wie aus Fig. 6 ersichtlich, ist T2 kleiner bzw. kürzer als T1. Dies ist der Fall, da der im unbestromten Zustand sich in der augenblicklichen Drehrichtung 2 von Fig. 3 drehende Rotor 220 bei der Bestromung der Wicklungsstränge 212, 214 in diese Drehrichtung angetrieben wird, d.h. die augenblickliche Drehrichtung und die Soll-Drehrichtung stimmen überein. Der Rotor 220 wird somit beschleunigt, so dass sich der Durchlauf des Segments 205 von T1 auf T2 verkürzt. Somit kann im vorliegenden Beispiel von Fig. 6 gemäß Schritt S18 von Fig. 3 die zweite Drehrichtung DIR_s = 2 als augenblickliche Drehrichtung DIR_n bestimmt werden.

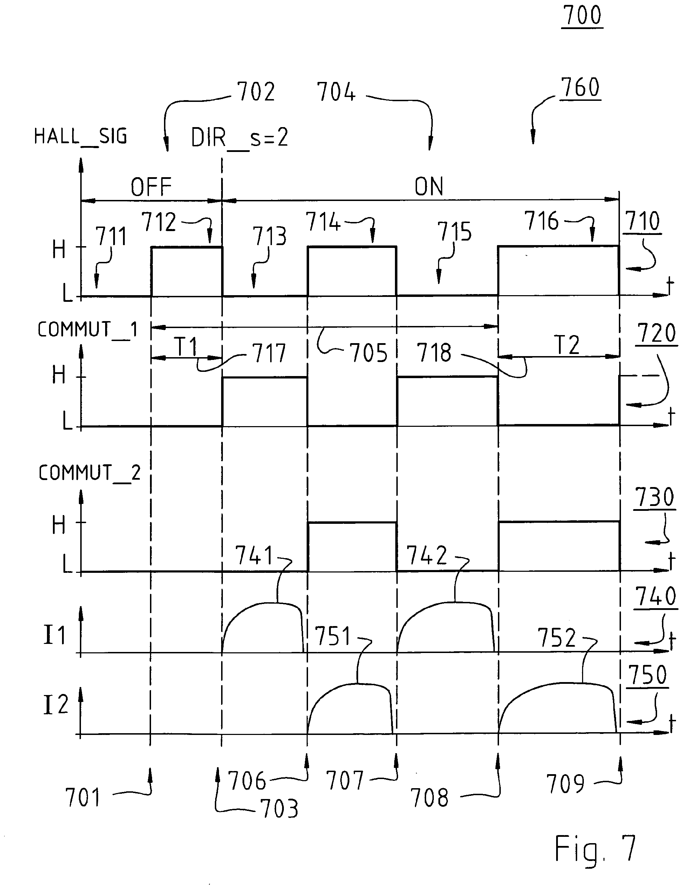

**Fig. 7** zeigt ein beispielhaftes Messdiagramm 700 mit einem Rotorstellungssignal 710 (HALL_SIG), Kommutierungssignalen 720, 730 (COMMUT_1, COMMUT_2), sowie zugeordneten Motorströmen 740, 750 (I₁ bzw. I₂) im Betrieb der Schaltung 200 von Fig. 2. In Fig. 7 wird davon ausgegangen, dass der Rotor 220 im unbestromten Zustand des ECM 250 eine augenblickliche Drehrichtung hat, die der Drehrichtung 1 von Fig. 3 entspricht. Das Rotorstellungssignal 710 und die Kommutierungssignale 720, 730 definieren gemäß ein Bestromungsmuster 760, mit dem die Wicklungsstränge 212, 214 bestromt werden, um eine Drehung des Rotors 220 in die Soll-Drehrichtung 2 von Fig. 3 (DIR_s = 1) zu bewirken.

Das Rotorstellungssignal 710 ist ein elektrisches Bild einer Rotation des ECM 250. Hierbei repräsentiert ein mit "OFF" gekennzeichneter Bereich 702 des Signals 710 ein elektrisches Bild einer Rotation des ECM 250 im unbestromten Zustand der Wicklungsstränge 212, 214, und ein mit "ON" gekennzeichneter Bereich 704 zeigt ein elektrisches Bild einer Rotation des ECM 250 im bestromten Zustand.

Das Signal 710 hat in Bereichen 711, 713 und 715 einen Wert L und in Bereichen 712, 714, 716 einen Wert H. Der zwischen zwei Zeitpunkten 701, 703 liegende Bereich 712, in dem das Signal 710 zum Zeitpunkt 701 von L nach H und dann zum Zeitpunkt 703 von H nach L wechselt, ist einem Drehwinkelbereich des Rotors 220 zugeordnet, welcher z.B. einem ersten Durchlauf des Segments 205 entspricht. Für diesen Bereich 712 kann, wie bei S12 (Fig. 3) beschrieben, eine erste drehzahlrelevante Zeitspanne 717 bestimmt werden, die mit "T1" gekennzeichnet ist.

Ab dem Zeitpunkt 703 wird die Endstufe 215 mit den Kommutierungssignalen 720, 730 angesteuert, um die unbestromten Wicklungsstränge 212, 214 zu bestromen. Hierbei wird vom Zeitpunkt 703 bis zum Zeitpunkt 706 und vom Zeitpunkt 707 bis zum Zeitpunkt 708 der Halbleiterschalter 211 eingeschaltet, um den Wicklungsstrang 212 zu bestromen, so dass in diesem Ströme 741 bzw. 742 fließen, während der Halbleiterschalter 213 ausgeschaltet bleibt. Vom Zeitpunkt 706 bis zum Zeitpunkt 707 und vom Zeitpunkt 708 bis zum Zeitpunkt 709 wird der Halbleiterschalter 211 ausgeschaltet und der Halbleiterschalter 213 eingeschaltet, um den Strang 214 zu bestromen, so dass in diesem Ströme 751 bzw. 752 fließen. Hierbei detektiert der Rotorstellungssensor 230 zwischen den Zeitpunkten 706 und 707 einen Durchlauf des Segments 207 des Rotors 220 und erzeugt den Bereich 714 des Signals 710. Zwischen den Zeitpunkten 708 und 709 detektiert der Rotorstellungssensor 230 einen erneuten Durchlauf des Segments 205 des Rotors 220 und erzeugt den Bereich 716 des Signals 710.

Da zwischen den Zeitpunkten 701 und 708 eine vollständige mechanische Umdrehung 705 des Rotors 220 liegt, repräsentiert der Bereich 716 ein zweites elektrisches Bild des Segments 205. Auf der Basis dieses Abbilds 716 kann, wie bei Schritt S16 von Fig. 3 beschrieben, eine zweite drehzahlrelevante Zeitspanne 718 bestimmt werden, die mit "T2" gekennzeichnet ist.

Wie Fig. 7 zeigt, ist T2 größer bzw. länger als T1. Dies ist der Fall, da der im unbestromten Zustand sich in die augenblickliche Drehrichtung 1 von Fig. 3 drehende Rotor 220 bei der Bestromung der Wicklungsstränge 212, 214 entgegen dieser Drehrichtung angetrieben wird, d.h. die aktuelle Drehrichtung und die Soll-Drehrichtung stimmen nicht überein. Der Rotor 220 wird somit gebremst, so dass sich der Durchlauf des Segments 205 von T1 auf T2 verlängert. Somit kann im vorliegenden Beispiel von Fig. 7 gemäß Schritt S19 von Fig. 3 die erste Drehrichtung DIR_s = 1 als augenblickliche Drehrichtung DIR_n bestimmt werden.

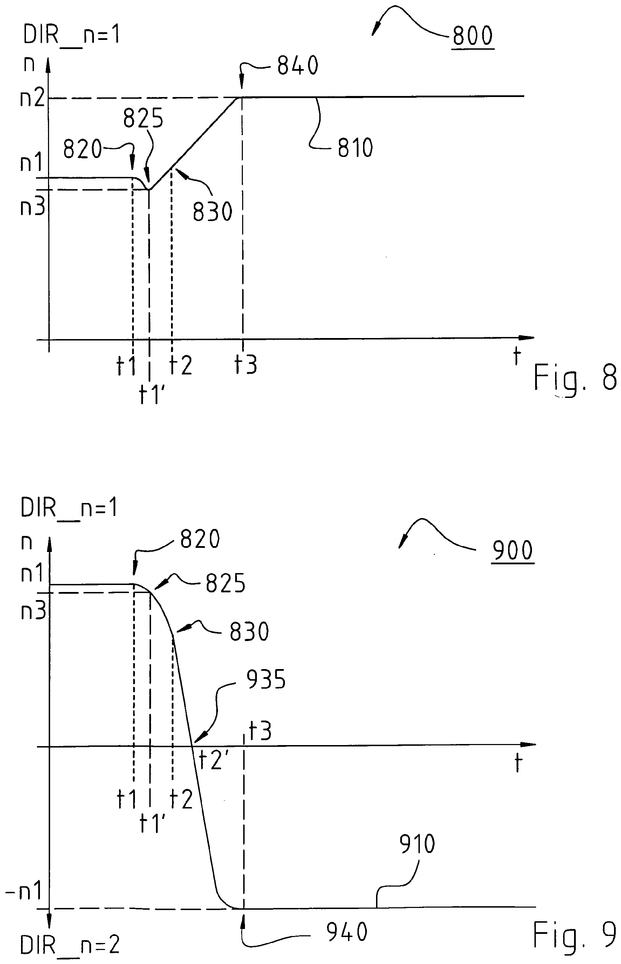

**Fig. 8** zeigt ein Messdiagramm 800 mit einem beispielhaften Drehzahlsignal 810, das gemessen wird, wenn die Schaltung 200 von Fig. 2 wie bei Fig. 4 beschrieben betrieben wird. Hierbei dreht sich der ECM 250 zunächst im bestromten Zustand der Wicklungsstränge 212, 214 mit einer ersten Drehzahl n1 in die augenblickliche Drehrichtung 1 (DIR_n = 1), welche wie bei Fig. 3 beschrieben z.B. den Vorwärts- oder Rechtslauf des ECM 250 kennzeichnet.

An einem Zeitpunkt 820 (t1) werden mittels der Drehrichtungsvorgabeeinheit 204 beispielhaft eine höhere Soll-Drehzahl n_s = n2 und eine Soll-Drehrichtung DIR_s = 1 vorgegeben, wobei diese Soll-Drehrichtung hier der augenblicklichen Drehrichtung des ECM 250 entspricht. Zur Verdeutlichung sei angenommen, dass der ECM 250 zum Antrieb des Lüfters 290 von Fig. 2 dient, der z.B. zur Belüftung einer Sitzfläche eines Fahrzeugsitzes ausgebildet ist. Dieser wird durch den mit der augenblicklichen Drehzahl n1 angetriebenen Lüfter 290 gekühlt. Ein auf der Sitzfläche sitzender Fahrer des Fahrzeugs möchte nun die Kühlkraft des Lüfters 290 durch Erhöhen der augenblicklichen Drehzahl n1 auf die Soll-Drehzahl n2 ohne Drehrichtungsänderung erhöhen, um die Sitzfläche stärker abzukühlen, z.B. um ein übermäßiges Schwitzen auf der Sitzfläche zu verhindern.

Zum Zeitpunkt 820 wird das Verfahren 300 von Fig. 3 initiiert, um eine augenblickliche Drehrichtung des ECM 250 zu ermitteln, wobei dieser zunächst abgeschaltet wird, d.h. ab dem Zeitpunkt 820 im unbestromten Zustand betrieben wird. Hierbei verlangsamt sich seine Drehzahl bei der gemäß S12 von Fig. 3 ausgeführten ersten Vermessung auf eine Drehzahl n3 zum Zeitpunkt 825 (t1'), an dem der ECM 250 gemäß dem Bestromungsmuster 460 von Fig. 4 erneut bestromt wird, gemäß Schritt S34 von Fig. 3. Der ECM 250 beschleunigt nun durch die Bestromung, und zum Zeitpunkt 830 (t2) erfolgt hier die gemäß Schritt S36 von Fig. 3 ausgeführte, zweite Vermessung des ECM 250.

Da im vorliegenden Beispiel gemäß den S38 und S40 von Fig. 3 eine Übereinstimmung der augenblicklichen und der Soll-Drehrichtung bestimmt wird, wird der ECM 250 weiterhin gemäß dem Bestromungsmuster 460 betrieben, so dass der ECM 250 sich ab einem Zeitpunkt 840 (t3) mit der vorgegebenen Soll-Drehzahl n2 dreht.

**Fig. 9** zeigt ein Messdiagramm 900 mit einem beispielhaften Drehzahlsignal 910, welches gemessen wird, wenn die Schaltung 200 der Fig. 2 wie bei Fig. 7 beschrieben betrieben wird. Hierbei dreht sich der ECM 250 zunächst im bestromten Zustand der Wicklungsstränge 212, 214 wie bei Fig. 8 mit einer ersten Drehzahl n1 in die augenblickliche Drehrichtung 1 (DIR_n = 1).

An einem Zeitpunkt 820 (t1) wird mittels der Drehrichtungsvorgabeeinheit 204 beispielhaft eine Soll-Drehrichtung DIR_s = 2 vorgegeben, welche zur augenblicklichen Drehrichtung entgegengesetzt ist. Die augenblickliche Drehzahl des ECM 250 soll beibehalten werden.

Ebenso wie bei Fig. 8 wird ab dem Zeitpunkt 820 das Verfahren 300 von Fig. 3 initiiert, um die augenblickliche Drehrichtung des ECM 250 zu ermitteln, wobei dieser zunächst abgeschaltet wird und somit ab dem Zeitpunkt 820 im unbestromten Zustand rotiert. Hierbei verlangsamt sich seine Drehzahl bei der gemäß Schritt S12 von Fig. 3 ausgeführten ersten Vermessung auf die Drehzahl n3 zum Zeitpunkt 825 (t1'), an dem der ECM 250 gemäß dem Bestromungsmuster 760 von Fig. 7 erneut bestromt wird, gemäß S14 von Fig. 3. Der ECM 250 wird durch die Bestromung abgebremst, und zum Zeitpunkt 830 (t2) erfolgt nun die gemäß Schritt S16 von Fig. 3 ausgeführte, zweite Vermessung des ECM 250.

Da im vorliegenden Beispiel gemäß den Schritten S19 und S20 der Fig. 3 ermittelt wird, dass die augenblickliche Drehrichtung DIR_n = 1 und die Soll-Drehrichtung DIR_s = 2 nicht übereinstimmen, lässt man den ECM 250 zunächst frei auslaufen, bis er an einem Zeitpunkt 935 (t2') stillsteht, und ab diesem Zeitpunkt wird er gemäß dem Bestromungsmuster 760 betrieben, so dass der ECM 250 sich ab einem Zeitpunkt 940 (t3), der etwa dem Zeitpunkt 840 von Fig. 8 entspricht, mit der Drehzahl n1 in der vorgegebenen Soll-Drehrichtung DIR_s = 2 dreht.

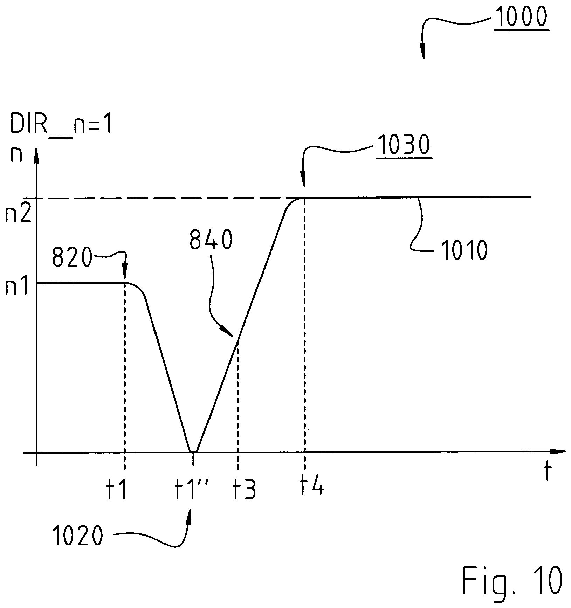

**Fig. 10** zeigt ein Messdiagramm 1000 mit einem beispielhaften Drehzahlsignal 1010, das gemessen wird, wenn der ECM 250 gemäß dem Stand der Technik betrieben wird. Hierbei dreht sich der ECM 250 zunächst im bestromten Zustand der Stränge 212, 214 wie bei Fig. 8 mit einer ersten Drehzahl n1 in die augenblickliche Drehrichtung 1 (DIR_n = 1). Zum Zeitpunkt 820 (t1) werden beispielhaft wie bei Fig. 8 die höhere Soll-Drehzahl n_s = n2 und die Soll-Drehrichtung DIR_s = 1 vorgegeben.

Gemäß dem Stand der Technik würde der ECM 250 nun zum Zeitpunkt 820 vom bestromten in den unbestromten Zustand versetzt, bis der ECM 250 zu einem Zeitpunkt 1020 (t1") im Stillstand ist. Ab diesem Zeitpunkt 1020 würde der ECM 250 erneut bestromt, so dass er sich ab einem Zeitpunkt 1030 (t4) etwa mit der Soll-Drehzahl n2 in der vorgegebenen Soll-Drehrichtung DIR_s = 1 drehen würde.

Zum Vergleich ist in Fig. 10 der Zeitpunkt 840 (t3) gezeigt, ab dem gemäß Fig. 8 die Drehzahl n2 erreicht ist. Somit kann eine Verkürzung einer entsprechenden Anlaufphase erreicht werden.

## Patentansprüche

1. Elektronisch kommutierter Motor (250), welcher aufweist:
Einen Stator (210), welchem eine Statorwicklungsanordnung (212, 214) zugeordnet ist;
einen Rotor (220), welcher in Wechselwirkung mit dem Stator (210) steht;
eine Vorrichtung (215) zur Bestromung der Statorwicklungsanordnung (212, 214) gemäß einem vorgegebenen Bestromungsmuster (460), welches einem ausgewählten Betriebszustand des Motors (250) zugeordnet ist;
einen Sensor (230) zur Erzeugung eines elektrischen Bilds (410) mindestens eines vorgegebenen Segments (205) einer vollständigen mechanischen Umdrehung (405) des Rotors (220),
wobei bei einer ersten Vermessung des Motors (250) im unbestromten Zustand während eines ersten Durchlaufens des vorgegebenen Segments (205) ein erstes elektrisches Bild (412; 512; 612; 712) dieses Segments (205) bestimmbar ist,
und bei einer zweiten Vermessung des Motors (250) im bestromten Zustand nach Ablauf eines n-fachen einer vollständigen mechanischen Umdrehung des Rotors (220), gemessen ab dem Beginn des ersten Durchlaufs des vorgegebenen Segments (205), wobei n = 1, 2, 3, etc. ist, ein zweites elektrisches Bild (416; 516; 616; 716) dieses Segments (205) bestimmbar ist;
eine Auswerteeinheit (240), welche zur Ausführung folgender Schritte ausgebildet ist:
A) das erste Bild (412; 512; 612; 712) wird mit dem zweiten Bild (416; 516; 616; 716) verglichen, um eine Information über einen tatsächlichen Betriebszustand des Motors (250) zu ermitteln, welche Information über den tatsächlichen Betriebszustand eine Information über die augenblickliche Drehrichtung des Motors ist, wobei zum Vergleich des ersten Bilds mit dem zweiten Bild die folgenden Schritte durchgeführt werden:
A1) auf der Basis des ersten Bilds (412; 512; 612; 712) wird eine erste drehzahlrelevante Zeitspanne (T1) bestimmt;
A2) auf der Basis des zweiten Bilds (416; 516; 616; 716) wird eine zweite drehzahlrelevante Zeitspanne (T2) bestimmt;
A3) die erste und zweite Zeitspanne (T1, T2) werden miteinander verglichen, um die Information über die augenblickliche Drehrichtung des Motors (250) zu erhalten;
B) auf der Basis dieser Information wird bestimmt, ob der tatsächliche Betriebszustand des Motors (250) dem ausgewählten Betriebszustand entspricht.

2. Motor nach Anspruch 1, bei welchem das elektrische Bild (410) mindestens eines vorgegebenen Segments (205) einer vollständigen mechanischen Umdrehung (405) des Rotors (220) zumindest einen ersten (H) und einen zweiten (L) Wert aufweist, wobei die Auswerteeinheit (240) dazu ausgebildet ist, die erste und zweite Zeitspanne (T1, T2) jeweils zwischen einem Wechsel des elektrischen Bilds (410) vom zweiten zum ersten Wert und einem darauf folgenden Wechsel vom ersten zum zweiten Wert zu bestimmen.

3. Motor nach Anspruch 1 oder 2, bei welchem die Auswerteeinheit (240) dazu ausgebildet ist, folgende weiteren Schritte auszuführen, wenn eine erste Drehrichtung (DIR_s=1) als ausgewählter Betriebszustand vorgegeben ist:
A4) falls die erste Zeitspanne (T1) größer ist als die zweite Zeitspanne (T2), wird die erste Drehrichtung (DIR_s=1) als augenblickliche Drehrichtung (DIR_n) bestimmt;
A5) falls die erste Zeitspanne (T1) kleiner oder gleich der zweiten Zeitspanne (T2) ist, wird eine zweite, zur ersten Drehrichtung (DIR_s=1) entgegen gesetzte Drehrichtung (DIR_s=2) als augenblickliche Drehrichtung (DIR_n) bestimmt.

4. Motor nach Anspruch 3, bei welchem die Auswerteeinheit (240) dazu ausgebildet ist, folgende weiteren Schritte auszuführen, wenn die zweite Drehrichtung (DIR_s=2) als ausgewählter Betriebszustand vorgegeben ist:
A4') falls die erste Zeitspanne (T1) größer als die zweite Zeitspanne (T2) ist, wird die zweite Drehrichtung (DIR_s=2) als augenblickliche Drehrichtung (DIR_n) bestimmt;
A5') falls die erste Zeitspanne (T1) kleiner oder gleich der zweiten Zeitspanne (T2) ist, wird die erste Drehrichtung (DIR_s=1) als augenblickliche Drehrichtung (DIR_n) bestimmt.

5. Motor nach einem der vorhergehenden Ansprüche, bei welchem der Sensor (230) ein galvanomagnetischer Sensor oder ein optischer Sensor ist.

6. Motor nach einem der vorhergehenden Ansprüche, welcher zur Ausführung folgender Schritte ausgebildet ist:
i) das erste elektrische Bild (412; 512; 612; 712) wird bestimmt;
ii) eine ausgewählte Drehrichtung (DIR_s) des Motors (250) wird als ausgewählter Betriebszustand vorgegeben;
iii) ein der ausgewählten Drehrichtung (DIR_s) zugeordnetes Bestromungsmuster (460, 560, 660, 760) wird bestimmt;
iv) die Statorwicklungsanordnung (212, 214) wird gemäß diesem Bestromungsmuster (460, 560, 660, 760) bestromt;
v) das zweite elektrische Bild (416; 516; 616; 716) wird bestimmt.

7. Verfahren zur Bestimmung der Drehrichtung eines elektronisch kommutierten Motors (250), welcher einen Stator (210) mit einer zugeordneten Statorwicklungsanordnung (212, 214), einen in Wechselwirkung mit dem Stator (210) stehenden Rotor (220), eine Vorrichtung (215) zur Bestromung der Statorwicklungsanordnung (212, 214) gemäß einem vorgegebenen Bestromungsmuster (460), welches einem auswählbaren Betriebszustand des Motors (250) zugeordnet ist, und einen Sensor (230) zur Erzeugung eines elektrischen Bilds (410) mindestens eines vorgegebenen Segments (205) einer vollständigen mechanischen Umdrehung (405) des Rotors (220),
welches Verfahren folgende Schritte aufweist:
A) bei einer ersten Vermessung des Motors (250) im unbestromten Zustand wird während eines ersten Durchlaufens des vorgegebene Segments (205) ein erstes elektrisches Bild (412; 512; 612; 712) dieses Segments (205) bestimmt;
B) bei einer zweiten Vermessung des Motors (250) im bestromten Zustand wird nach Ablauf eines n-fachen Vielfachen einer vollständigen mechanischen Umdrehung des Rotors (220), gemessen ab dem Beginn des ersten Durchlaufs des vorgegebenen Segments (205), wobei n = 1, 2, 3, etc. ist, ein zweites elektrisches Bild (416; 516; 616; 716) des Segments (205) bestimmt;
C) das erste Bild (412; 512; 612; 712) wird mit dem zweiten Bild (416; 516; 616; 716) verglichen, um eine Information über einen tatsächlichen Betriebszustand des Motors (250) zu erhalten, welche Information über den tatsächlichen Betriebszustand des Motors (250) eine Information über die augenblickliche Drehrichtung des Motors (250) ist, wobei zum Vergleich des ersten Bilds mit dem zweiten Bild die folgenden Schritte durchgeführt werden:
C1) auf der Basis des ersten Bilds (412; 512; 612; 712) wird eine erste drehzahlrelevante Zeitspanne (T1) bestimmt;
C2) auf der Basis des zweiten Bilds (416; 516; 616; 716) wird eine zweite drehzahlrelevante Zeitspanne (T2) bestimmt;
C3) die erste und zweite Zeitspanne (T1, T2) werden miteinander verglichen, um die Information über die augenblickliche Drehrichtung des Motors (250) als tatsächlichen Betriebszustand zu erhalten;
D) auf der Basis dieser Information wird bestimmt, ob der tatsächliche Betriebszustand des Motors (250) dem ausgewählten Betriebszustand entspricht.

8. Verfahren nach Anspruch 7, bei welchem das elektrische Bild (410) mindestens eines vorgegebenen Segments (205) einer vollständigen mechanischen Umdrehung (405) des Rotors (220) zumindest einen ersten (H) und einen zweiten (L) Wert aufweist, wobei die erste und die zweite Zeitspanne (T1, T2) jeweils zwischen einem Wechsel des elektrischen Bilds (410) vom zweiten zum ersten Wert und einem darauf folgenden Wechsel vom ersten zum zweiten Wert bestimmt werden.

9. Verfahren nach Anspruch 7 oder 8, welches in Schritt C) folgende weiteren Schritte aufweist, wenn eine erste Drehrichtung (DIR_s=1) als ausgewählter Betriebszustand vorgegeben ist:
C4) falls die erste Zeitspanne (T1) größer als die zweite Zeitspanne (T2) ist, wird die erste Drehrichtung (DIR_s=1) als augenblickliche Drehrichtung (DIR_n) bestimmt;
C5) falls die erste Zeitspanne (T1) kleiner oder gleich der zweiten Zeitspanne (T2) ist, wird eine zweite, der ersten Drehrichtung (DIR_s=1) entgegengesetzte Drehrichtung (DIR_s=2) als augenblickliche Drehrichtung (DIR_n) bestimmt.

10. Verfahren nach Anspruch 9, welches in Schritt C) folgende weiteren Schritte aufweist, wenn die zweite Drehrichtung (DIR_s=2) als ausgewählter Betriebszustand vorgegeben ist:
C4') falls die erste Zeitspanne (T1) größer als die zweite Zeitspanne (T2) ist, wird die zweite Drehrichtung (DIR_s=2) als augenblickliche Drehrichtung (DIR_n) bestimmt;
C5') falls die erste Zeitspanne (T1) kleiner oder gleich der zweiten Zeitspanne (T2) ist, wird die erste Drehrichtung (DIR_s=1) als augenblickliche Drehrichtung (DIR_n) bestimmt.

11. Verfahren nach einem der Ansprüche 7 bis 10, welches nach Schritt A) folgende weiteren Schritte ausweist:
i) eine ausgewählte Drehrichtung (DIR_s) des Motors (250) wird als ausgewählter Betriebszustand vorgegeben;
ii) ein der ausgewählten Drehrichtung (DIR_s) zugeordnetes Bestromungsmuster (460, 560, 660, 760) wird bestimmt;
iii) die Statorwicklungsanordnung (212, 214) wird gemäß diesem Bestromungsmuster (460, 560, 660, 760) bestromt.

## Claims

1. An electronically commutated motor (250), which has:
a stator (210), with which a stator winding arrangement (212, 214) is associated;
a rotor (220), which interacts with the stator (210);
a device (215) for energizing the stator winding arrangement (212, 214) according to a predetermined energization pattern (460), which is associated with a selected operating state of the motor (250);
a sensor (230) for generating an electrical image (410) of at least one predetermined segment (205) of a complete mechanical revolution (405) of the rotor (220),
wherein, during a first measurement of the motor (250) in the deenergized state during a first pass of the predetermined segment (205), a first electrical image (412; 512; 612; 712) of this segment (205) is determinable,
and, during a second measurement of the motor (250) in the energized state after passage of an n-fold of a complete mechanical revolution of the rotor (220), measured from the beginning of the first pass of the predetermined segment (205), wherein n = 1. 2, 3, etc., a second electrical image (416; 516; 616; 716) of this segment (205) is determinable;
an evaluation unit (240), which is designed to execute the following steps:
A) the first image (412; 512; 612; 712) is compared to the second image (416; 516; 616; 716) to obtain an item of information about an actual operating state of the motor (250), which information about the actual operating state is an item of information about the instantaneous rotational direction of the motor, wherein the following steps are carried out to compare the first image to the second image:
A1) a first speed-relevant time span (T1) is determined on the basis of the first image (412; 512; 612; 712);
A2) a second speed-relevant time span (T2) is determined on the basis of the second image (416, 516; 616; 716);
A3) the first and second time span (T1, T2) are compared to one another to obtain the item of information about the instantaneous rotational direction of the motor (250);
B) it is determined on the basis of this item of information whether the actual operating state of the motor (250) corresponds to the selected operating state.

2. The motor as claimed in claim 1, in which the electrical image (410) of at least one predetermined segment (205) of a complete mechanical revolution (405) of the rotor (220) has at least one first (H) and one second (L) value, wherein the evaluation unit (240) is designed to define the first and second time span (T1, T2) in each case between a change of the electrical image (410) from the second to the first value and a change following thereon from the first to the second value.

3. The motor as claimed in claim 1 or 2, in which the evaluation unit (240) is designed to execute the following further steps if a first rotational direction (DIR_s = 1) is specified as the selected operating state:
A4) if the first time span (T1) is greater than the second time span (T2), the first rotational direction (DIR_s = 1) is determined as the instantaneous rotational direction (DIR_n);
A5) if the first time span (T1) is less than or equal to the second time span (T2), a second rotational direction (DIR_s = 2) opposite to the first rotational direction (DIR_s = 1) is determined as the instantaneous rotational direction (DIR_n).

4. The motor as claimed in claim 3, in which the evaluation unit (240) is designed to execute the following further steps if the second rotational direction (DIR_s = 2) is specified as the selected operating state:
A4') if the first time span (T1) is greater than the second time span (T2), the second rotational direction (DIR_s = 2) is determined as the instantaneous rotational direction (DIR_n);
A5') if the first time span (T1) is less than or equal to the second time span (T2), the first rotational direction (DIR_s = 1) is determined as the instantaneous rotational direction (DIR_n).

5. The motor as claimed in any one of the preceding claims, in which the sensor (230) is a galvanomagnetic sensor or an optical sensor.

6. The motor as claimed in any one of the preceding claims, which is designed to execute the following steps:
i) the first electrical image (412; 512; 612; 712) is determined;
ii) a selected rotational direction (DIR_s) of the motor (250) is specified as the selected operating state;
iii) an energization pattern (460, 560, 660, 760) associated with the selected rotational direction (DIR_s) is determined;
iv) the stator winding arrangement (212, 214) is energized according to this energization pattern (460, 560, 660, 760);
v) the second electrical image (416; 516; 616; 716) is determined.

7. A method for determining the rotational direction of an electronically commutated motor (250), which has a stator (210) having an associated stator winding arrangement (212, 214), a rotor (220) interacting with the stator (210), a device (215) for energizing the stator winding arrangement (212, 214) according to a predetermined energization pattern (460), which is associated with a selectable operating state of the motor (250), and a sensor (230) for generating an electrical image (410) of at least one predetermined segment (205) of a complete mechanical revolution (405) of the motor (220), which method has the following steps:
A) during a first measurement of the motor (250) in the deenergized state, during a first pass of the predetermined segment (205), a first electrical image (412; 512; 612; 712) of this segment (205) is determined;
B) during a second measurement of the motor (250) in the energized state, after passage of an n-fold multiple of a complete mechanical revolution of the rotor (220), measured from the beginning of the first pass of the predetermined segment (205), wherein n = 1, 2, 3, etc., a second electrical picture (416; 516; 616; 716) of the segment (205) is determined;
C) the first image (412; 512; 612; 712) is compared to the second image (416; 516; 616; 716) to obtain an item of information about an actual operating state of the motor (250), which information about the actual operating state of the motor (250) is an item of information about the instantaneous rotational direction of the motor (250), wherein the following steps are carried out to compare the first image to the second image:
C1) a first speed-relevant time span (T1) is determined on the basis of the first image (412; 512; 612; 712);
C2) a second speed-relevant time span (T2) is determined on the basis of the second image (416; 516; 616; 716);
C3) the first and second time span (T1, T2) are compared to one another to obtain the information about the instantaneous rotational direction of the motor (250);
D) it is determined on the basis of this item of information whether the actual operating state of the motor (250) corresponds to the selected operating state.

8. The method as claimed in claim 7, in which the electrical image (410) of at least one predetermined segment (205) of a complete mechanical revolution (405) of the rotor (220) has at least one first (H) and one second (L) value, wherein the first and second time span (T1, T2) are defined in each case between a change of the electrical image (410) from the second to the first value and a change following thereon from the first to the second value.

9. The method as claimed in claim 7 or 8, which has the following further steps in step C) if a first rotational direction (DIR_s = 1) is specified as the selected operating state:
C4) if the first time span (T1) is greater than the second time span (T2), the first rotational direction (DIR_s = 1) is determined as the instantaneous rotational direction (DIR_n);
C5) if the first time span (T1) is less than or equal to the second time span (T2), a second rotational direction (D)R_s = 2) opposite to the first rotational direction (D)R_s = 1) is determined as the instantaneous rotational direction (DIR_n).

10. The method as claimed in claim 9, which has the following further steps in step C) if the second rotational direction (DIR_s = 2) is specified as the selected operating state:
C4') if the first time span (T1) is greater than the second time span (T2), the second rotational direction (DIR_s = 2) is determined as the instantaneous rotational direction (DIR_n);
C5') if the first time span (T1) is less than or equal to the second time span (T2), the first rotational direction (DIR_s = 1) is determined as the instantaneous rotational direction (DIR_n).

11. The method as claimed in any one of claims 7 to 10, which has the following further steps after step A):
i) a selected rotational direction (DIR_s) of the motor (250) is specified as the selected operating state;
ii) an energization pattern (460, 560, 660, 760) associated with the selected rotational direction (DIR_s) is determined;
iii) the stator winding arrangement (212, 214) is energized according to this energization pattern (460, 560, 660, 760).

## Revendications

1. Moteur électronique commuté (250), qui présente :
un stator (210) auquel est associé un agencement d'enroulement de stator (212, 214) ;
un rotor (220) qui est en interaction avec le stator (210) ;
un dispositif (215) pour l'alimentation de l'agencement d'enroulement de stator (212, 214) selon un modèle d'alimentation prescrit (460) qui est associé à un état de fonctionnement sélectionné du moteur (250) ;
un capteur (230) pour la génération d'une image électrique (410) au moins d'un segment prescrit (205) d'une rotation (405) mécanique complète du rotor (220),
dans lequel lors d'une première mesure du moteur (250) dans l'état non alimenté pendant un premier passage du segment prescrit (205) une première image électrique (412 ; 512 ; 612 ; 712) de ce segment (205) peut être déterminée,
et lors d'une seconde mesure du moteur (250) dans l'état alimenté après expiration d'un n fois d'une rotation mécanique complète du rotor (220), mesurée à partir du premier passage du segment prescrit (205), dans lequel n = 1, 2, 3, etc., une seconde image électrique (416 ; 516 ; 616 ; 716) de ce segment (205) peut être déterminée ;
une unité d'évaluation (240) qui est réalisée pour la réalisation des étapes suivantes :
A) la première image (412 ; 512 ; 612 ; 712) est comparée à la seconde image (416 ; 516 ; 616 ; 716) afin de déterminer une information sur un état de fonctionnement réel du moteur (250), laquelle information sur l'état de fonctionnement réel est une information sur le sens de rotation momentané du moteur, dans lequel pour la comparaison de la première image avec la seconde image les étapes suivantes sont réalisées :
A1) sur la base de la première image (412 ; 512 ; 612 ; 712) un premier intervalle important pour la vitesse de rotation (T1) est déterminé ;
A2) sur la base de la seconde image (416 ; 516 ; 616 ; 716) un second intervalle pertinent pour la vitesse de rotation (T2) est déterminé ;
A3) le premier et second intervalle (T1, T2) sont comparés l'un à l'autre afin de recevoir l'information sur le sens de rotation momentané du moteur (250) ;
B) sur la base de cette information il est déterminé si l'état de fonctionnement réel du moteur (250) correspond à l'état de fonctionnement sélectionné.

2. Moteur selon la revendication 1, pour lequel l'image électrique (410) au moins d'un segment prescrit (205) d'une rotation (405) mécanique complète du rotor (220) présente au moins une première (H) et une seconde (L) valeur, dans lequel l'unité d'évaluation (240) est réalisée afin de déterminer le premier et second intervalle (T1, T2) respectivement entre un changement de l'image électrique (410) de la seconde à la première valeur et un changement consécutif de la première à la seconde valeur.

3. Moteur selon la revendication 1 ou 2, pour lequel l'unité d'évaluation (240) est réalisée afin de réaliser d'autres étapes suivantes lorsqu'un premier sens de rotation (DIR_s=1) est prescrit comme état de fonctionnement sélectionné :
A4) si le premier intervalle (T1) est supérieur au second intervalle (T2), le premier sens de rotation (DIR_s=1) est déterminé comme sens de rotation (DIR_n) momentané ;
A5) si le premier intervalle (T1) est inférieur ou égal au second intervalle (T2), un second sens de rotation (DIR_s=2) opposé au premier sens de rotation (DIR_S=1) est déterminé comme sens de rotation momentané (DIR_n).

4. Moteur selon la revendication 3, pour lequel l'unité d'évaluation (240) est réalisée afin de réaliser d'autres étapes suivantes lorsque le second sens de rotation (DIR_s=2) est prescrit comme état de fonctionnement sélectionné :
A4') si le premier intervalle (T1) est supérieur au second intervalle (T2), le second sens de rotation (DIR_s=2) est déterminé comme sens de rotation (DIR_n) momentané ;
A5') si le premier intervalle (T1) est inférieur ou égal au second intervalle (T2), le premier sens de rotation (DIR_s=1) est déterminé comme sens de rotation (DIR_n) momentané.

5. Moteur selon l'une des revendications précédentes, pour lequel le capteur (230) est un capteur galvanomagnétique ou un capteur optique.

6. Moteur selon l'une des revendications précédentes, qui est réalisé pour la réalisation des étapes suivantes :
i) la première image électrique (412 ; 512 ; 612 ; 712) est déterminée ;
ii) un sens de rotation (DIR_s) sélectionné du moteur (250) est prescrit comme état de fonctionnement sélectionné ;
iii) un modèle d'alimentation (460, 560, 660, 760) associé au sens de rotation (DIR_s) sélectionné est déterminé ,
iv) l'agencement d'enroulement de stator (212, 214) est alimenté selon ce modèle d'alimentation (460, 560, 660, 760) ;
v) la seconde image électrique (416 ; 516 ; 616 ; 716) est déterminée.

7. Procédé de détermination du sens de rotation d'un moteur électronique commuté (250), qui présente un stator (210) avec un agencement d'enroulement de stator (212, 214) associé, un rotor (220) se trouvant en interaction avec le stator (210), un dispositif (215) pour l'alimentation de l'agencement d'enroulement de stator (212, 214) selon un modèle d'alimentation (460) prescrit qui est associé à un état de fonctionnement sélectionnable du moteur (250), et un capteur (230) pour la génération d'une image électrique (410) au moins d'un segment prescrit (205) d'une rotation mécanique complète (405) du rotor (220), lequel procédé présente les étapes suivantes :
A) lors d'une première mesure du moteur (250) dans l'état non alimenté une première image électrique (412 ; 512 ; 612 ; 712) de ce segment (205) est déterminée pendant un premier passage du segment prescrit (205) ;
B) lors d'une seconde mesure du moteur (250) dans l'état alimenté une seconde image électrique (416 ; 516 ; 616 ; 716) du segment (205) est déterminée après expiration d'un multiple n d'une rotation mécanique complète du rotor (220), mesurée à partir du premier passage du segment prescrit (205), dans lequel n = 1, 2, 3, etc. ;
C) la première image (412 ; 512 ; 612 ; 712) est comparée à la seconde image (416 ; 516 ; 616 ; 716) afin de recevoir une information sur un état de fonctionnement réel du moteur (250), laquelle information sur l'état de fonctionnement réel du moteur (250) est une information sur le sens de rotation momentané du moteur (250), dans lequel les étapes suivantes sont réalisées pour la comparaison de la première image avec la seconde image :
C1) sur la base de la première image (412 ; 512 ; 612 ; 712) un premier intervalle important pour la vitesse de rotation (T1) est déterminé ;
C2) sur la base de la seconde image (416 ; 516 ; 616 ; 716) un second intervalle pertinent pour la vitesse de rotation (T2) est déterminé ;
C3) le premier et second intervalle (T1, T2) sont comparés l'un à l'autre afin de recevoir l'information sur le sens de rotation momentané du moteur (250) comme état de fonctionnement réel ;
D) sur la base de cette information il est déterminé si l'état de fonctionnement réel du moteur (250) correspond à l'état de fonctionnement sélectionné.

8. Procédé selon la revendication 7, pour lequel l'image électrique (410) au moins d'un segment prescrit (205) d'une rotation (405) mécanique complète du rotor (220) présente au moins une première (H) et une seconde (L) valeur, dans lequel le premier et le second intervalle (T1, T2) sont déterminés respectivement entre un changement de l'image électrique (410) de la seconde à la première valeur et un changement consécutif de la première à la seconde valeur.

9. Procédé selon la revendication 7 ou 8, qui présente à l'étape C) d'autres étapes suivantes lorsqu'un premier sens de rotation (DIR_s=1) est prescrit comme état de fonctionnement sélectionné :
C4) si le premier intervalle (T1) est supérieur au second intervalle (T2), le premier sens de rotation (DlR_s=1) est déterminé comme sens de rotation (DIR_n) momentané ;
C5) si le premier intervalle (T1) est inférieur ou égal au second intervalle (T2), un second sens de rotation (DIR_s=2) opposé au premier sens de rotation (DIR_s=1) est déterminé comme sens de rotation (DIR_n) momentané.

10. Procédé selon la revendication 9 qui présente à l'étape C) les autres étapes suivantes lorsque le second sens de rotation (DIR_s=2) est prescrit comme état de fonctionnement sélectionné :
C4') si le premier intervalle (T1) est supérieur au second intervalle (T2), le second sens de rotation (DIR_s=2) est déterminé comme sens de rotation (DIR_n) momentané ;
C5') si le premier intervalle (T1) est inférieur ou égal au second intervalle (T2), le premier sens de rotation (DIR_s=1) est déterminé comme sens de rotation (DIR_n) momentané.

11. Procédé selon l'une des revendications 7 à 10 qui présente après l'étape A) les autres étapes suivantes :
i) un sens de rotation (DIR_s) sélectionné du moteur (250) est prescrit comme état de fonctionnement sélectionné ;
ii) un modèle d'alimentation (460, 560, 660, 760) associé au sens de rotation (DIR_s) sélectionné est déterminé ;
iii) l'agencement d'enroulement de stator (212, 214) est alimenté selon ce modèle d'alimentation (460, 560, 660, 760).
